# EUROPEAN PATENT APPLICATION

(11) **EP 4 417 662 A1**
(43) Date of publication of application: **21.08.2024**
(21) Application number: 22941427.1
(22) Date of filing: 15.09.2022
(51) Int. Cl.: C09J 11/04, C09J 4/02

(54) **ZIRCONIA RESIN TYPE DISPERSION LIQUID, UV CURING GLUE, AND PREPARATION METHOD THEREFOR AND APPLICATION THEREOF**

(30) Priority: 07.05.2022 CN 202210491296
(71) Applicant: Shandong Sinocera Functional Material Co., Ltd., Dongying, Shandong 257091 (CN)
(72) Inventor: SONG, Xibin, Dongying, Shandong 257091 (CN); MA, Haiyang, Dongying, Shandong 257091 (CN); AI, Liaodong, Dongying, Shandong 257091 (CN); XI, Hongliang, Dongying, Shandong 257091 (CN)
(74) Representative: Tiburzi, Andrea
(86) International application number: PCT/CN2022/119074
(87) International publication number: WO 2023/216486

(57) **Abstract**

The present invention provides a zirconia resin-based dispersion liquid, a UV-curable adhesive, a preparation method and use thereof, which relates to the technical field of optical film preparation. The zirconia resin-based dispersion liquid is mainly composed of modified zirconia particles and resin, wherein the surface of the modified zirconia particles has hydrogen bond donor groups, and the grafted amount of the hydrogen bond donor groups on the surface of the zirconia particles is 1-20 wt%. The modified zirconia particles in the above zirconia resin-based dispersion liquid can not only increase the liposolubility of the zirconia particles due to the introduction of hydrogen bond donor groups on the surface, but also have the hydrogen bond interaction with alkoxy bisphenol A resin (BPA resin), thereby increasing the compatibility and stability of the zirconia resin-based dispersion liquid and the BPA resin.

## Description

### Cross-Reference to Related Applications

The present invention claims the priority to the Chinese patent application with the filing No. 202210491296.6 filed with the Chinese Patent Office on May 7, 2022, and entitled "Zirconia Resin-based Dispersion Liquid, UV-curable Adhesive and Preparation Method and Use Thereof", all the contents of which are incorporated herein by reference.

### Technical Field

The present invention relates to the technical field of preparation of optical film, in particular to a zirconia resin-based dispersion liquid, a UV-curable adhesive, and a preparation method and use thereof.

### Background Art

In recent years, resin-based zirconia dispersion liquid is obtained by combining zirconia particle dispersion with transparent resins or films, which have been well used in the optical field. For example, zirconia resin-based dispersion liquid is used to prepare optical films such as brightness-enhancing films and anti-reflection films, which can be used on LCD displays to increase the brightness and clarity of the screen. In the above-mentioned applications, such materials are not only required to have a higher refractive index and lower viscosity, but also required to have good compatibility after being mixed with resins in downstream applications, such that the UV-curable adhesive can be made that can evenly coated on the surface of optical film. Therefore, in order to meet the market demand, it is crucial to prepare a zirconia resin-based dispersion liquid with good compatibility and higher light transmittance after being mixed with the resin.

Although some resin-based dispersion liquids have been successfully prepared now, most of them have the problem of poor compatibility with downstream resins, so that the effect is affected when being applied to the downstream display field. For example, patent CN 106268394 B discloses a preparation method of a zirconia dispersion liquid and its resin composition. When the content in the aqueous zirconia dispersion liquid is more than 20% by weight, the transmittance at a wavelength of 400 nm is more than 35%, the transmittance at the wavelength of 800 nm is 95% or more, and the viscosity at a temperature of 25°C is 20 mPa·s or less. However, this invention does not relate to the contents of compatibility and stability of the zirconia resin-based dispersion liquid. In production practice, experiments show that the above-mentioned zirconia dispersion liquid has poor compatibility with alkoxy bisphenol A resin (BPA resin).

Since the zirconia resin-based dispersion liquid is an organic-inorganic composite system, and the components interact with each other and the influencing factors are complex, their compatibility and stability are the key factors related to the downstream applications. Therefore, developing a resin-based dispersion liquid with simple process, various indicators coordinated to each other in the system and good compatibility and stability has significant meaning to the post production.

In view of this, the present invention is proposed.

### Summary

The purpose of the present invention includes providing a zirconia resin-based dispersion liquid and a preparation method thereof, so as to solve at least one technical problem existing in the prior art.

In order to achieve at least one of the above-mentioned purposes of the present invention, the technical solutions specially adopted are as follow.

The present invention provides a zirconia resin-based dispersion liquid, wherein the zirconia resin-based dispersion liquid is mainly composed of modified zirconia particles and resin; and
the surface of the modified zirconia particles has hydrogen bond donor group, and the grafted amount of the hydrogen bond donor group on the surface of the zirconia particles used to form the modified zirconia particles is between 1wt% and 20 wt%.

Optionally, the hydrogen bond donor groups on the surface of the zirconia particles are mainly introduced by a modifier, wherein
a general formula of the modifier is: R-A-X (I),
where in formula (I), R is alkyl groups, alkoxy groups, carboxyl groups, hydroxyl groups, substituted or unsubstituted aromatic rings or substituted or unsubstituted acryloyloxy groups; A is alkoxy chain segments, thioether chain segments or aromatic ether chain segments; and X is carboxyl groups, hydroxyl groups, phosphate groups, sulfonic acid groups, or substituted or unsubstituted siloxy groups.

Preferably, the modifier comprises at least one of 3,6-dioxaoctanedioic acid, 2-(2-(2-(2-hydroxyethoxy)ethoxy)ethoxy)acetic acid, thiodipropionic acid and 3,3'-dithiodipropionic acid.

Optionally, the resin comprises at least one of a phenoxybenzyl acrylate, a biphenylmethanol acrylate, a benzyl acrylate and an o-phenylphenoxyethyl acrylate.

Preferably, a particle size of the zirconia particles is between 1nm and 30 nm.

The present invention further provides a method for preparing the above-mentioned zirconia resin-based dispersion liquid, wherein the preparation method comprises the following steps:
(a) adding zirconia particles into an organic solvent and mixing them evenly, then adding modifiers and solubilizers to modify the zirconia particles to obtain solution A, wherein
   the solution A contains modified zirconia particles with hydrogen bond donor groups on the surface; and
(b) mixing the solution A with the resin evenly, and then evaporating to remove the organic solvent to obtain a zirconia resin-based dispersion liquid.

Optionally, the organic solvent comprises at least one of alcohol organic solvents, ketone organic solvents, ester organic solvents, ether organic solvents, aromatic hydrocarbon organic solvents, halogenated hydrocarbon organic solvents and cycloalkane organic solvents. Preferably, the organic solvent is a methoxyethyl acetate.

Preferably, a mass ratio of the zirconia particles to the organic solvent is 1:1-4, and preferably, 1:2.

Optionally, an addition amount of the modifier in the step (a) is 10-30wt% of a mass of the zirconia particles.

Preferably, an addition amount of the solubilizer in the step (a) is 1-10wt% of a mass of the zirconia particles.

Further preferably, the solubilizer comprises at least one of sodium dodecyl sulfate, polyethylene glycol monooleate, polyethylene glycol laurate and polyethylene glycol monostearate.

Optionally, a mass of the modified zirconia particles in the zirconia resin-based dispersion liquid is 50-78wt%.

The present invention further provides a UV-curable adhesive, which is mainly prepared by mixing the above-mentioned zirconia resin-based dispersion liquid with alkoxy bisphenol A resin evenly, wherein
the solubility parameter difference between the zirconia resin-based dispersion liquid and the alkoxy bisphenol A resin is ≤0.8.

Preferably, a mixing mass ratio of the zirconia resin-based dispersion liquid to the alkoxy bisphenol A resin is 0.5-3:1, and preferably, 1:1.

Optionally, the alkoxy bisphenol A resin comprises at least one of 2(ethoxyl) bisphenol A diacrylate, 3(ethoxyl) bisphenol A diacrylate, 4(ethoxyl) bisphenol A diacrylate, 8(ethoxyl) bisphenol A diacrylate, 20(ethoxyl) bisphenol A diacrylate and 30(ethoxyl) bisphenol A diacrylate resin. Preferably, the alkoxy bisphenol A resin is 20(ethoxyl) bisphenol A diacrylate resin.

Further preferably, the alkoxy bisphenol A resin is KOMERATE D200.

The present invention finally provides use of the above-mentioned zirconia resin-based dispersion liquid and the above-mentioned UV-curable adhesive in the preparation of optical films.

Compared to the prior art, the present invention has the following benefit effects.

The zirconia resin-based dispersion liquid provided by the present invention is mainly composed of modified zirconia particles and resin, wherein the surface of the modified zirconia particles has hydrogen bond donor groups, and the grafted amount of hydrogen bond donor groups on the surface of zirconia particles is 1-20wt%. The modified zirconia particles in the above-mentioned zirconia resin-based dispersion liquid can not only increase the liposolubility of the zirconia particles due to the introduction of hydrogen bond donor groups on the surface, but also have hydrogen bond interaction with alkoxy bisphenol A resin (BPA resin), thereby increasing the compatibility and stability of the zirconia resin-based dispersion liquid and the BPA resin.

As for the preparation method of the zirconia resin-based dispersion liquid provided by the present invention, in the preparation method, firstly the zirconia particles are added into an organic solvent and the resultant is evenly mixed, and then the modifiers and solubilizers are added to modify the zirconia particles, thereby obtaining solution A; after that, the solution A is mixed evenly with the resin, and then the organic solvent is removed by evaporation to obtain a zirconia resin-based dispersion liquid. The aforementioned preparation method can directly use the simplest process method to add zirconia powder into the organic solvent, which can greatly reduce the process steps, thereby reducing the cost; at the same time, the preparation process does not require the participation of the intermediate phase and has the advantages of simple process and easy operation.

The UV-curable adhesive provided by the present invention is mainly prepared by mixing the above-mentioned zirconia resin-based dispersion liquid with alkoxy bisphenol A resin evenly, wherein the solubility parameter difference between the zirconia resin-based dispersion liquid and the alkoxy bisphenol A resin is ≤0.8. Therefore, the zirconia resin-based dispersion liquid has good compatibility and stability with the alkoxy bisphenol A resin.

The zirconia resin-based dispersion liquid and UV-curable adhesive provided in the present invention can be widely used in the preparation process of optical films.

### Detailed Description of Embodiments

The technical solutions in the examples of the present invention will be clearly and completely described below. Apparently, the described examples are merely a part, rather than all of the examples of the present invention. Based on the examples of the present invention, all other examples obtained by those skilled in the art without creative efforts fall within the protection scope of the present invention.

In one aspect, the present invention provides a zirconia resin-based dispersion liquid, wherein the zirconia resin-based dispersion liquid is mainly composed of modified zirconia particles and resin; and
the modified zirconia particles have hydrogen bond donor groups on the surface, and the grafted amount of hydrogen bond donor groups on the surface of the zirconia particles used to form the modified zirconia particles is 1-20wt%.

The zirconia resin-based dispersion liquid provided by the present invention is mainly composed of modified zirconia particles and resin, wherein the surface of the modified zirconia particles has hydrogen bond donor groups, and the grafted amount of hydrogen bond donor groups on the surface of zirconia particles is 1-20wt%. The modified zirconia particles in the above-mentioned zirconia resin-based dispersion liquid can not only increase the liposolubility of the zirconia particles due to the introduction of hydrogen bond donor groups on the surface, but also have hydrogen bond interaction with alkoxy bisphenol A resin (BPA resin), thereby increasing the compatibility and stability of the zirconia resin-based dispersion liquid and the BPA resin.

In a preferable embodiment of the present invention, the hydrogen bond donor groups on the surface of the zirconia particles are mainly introduced by the modifier,
wherein the general formula of the modifier is: R-A-X (I),
where in formula (I), R is alkyl groups, alkoxy groups, carboxyl groups, hydroxyl groups, substituted or unsubstituted aromatic rings or substituted or unsubstituted acryloyloxy groups; A is alkoxy chain segments, thioether chain segments or aromatic ether chain segments; and X is carboxyl groups, hydroxyl groups, phosphate groups, sulfonic acid groups, or substituted or unsubstituted siloxy groups.

Preferably, the modifier includes at least one of 3,6-dioxaoctanedioic acid, 2-(2-(2-(2-hydroxyethoxy)ethoxy)ethoxy)acetic acid, thiodipropionic acid and 3,3'-dithiodipropionic acid.

As a preferable embodiment, the grafting of the above-mentioned modifiers not only increase the liposolubility of the zirconia particles, but also introduce hydrogen bond donor groups to the surface of the zirconia, and the hydrogen bond donor groups have hydrogen bond interaction with the BPA resin, thereby increasing the compatibility of these two.

In a preferable embodiment of the present invention, the resin includes at least one of phenoxybenzyl acrylate, biphenylmethanol acrylate, benzyl acrylate and o-phenylphenoxyethyl acrylate.

In a preferable embodiment of the present invention, the particle size of the zirconia particles is between 1 nm and 30 nm.

As a preferable embodiment, the above-mentioned zirconia particles have a particle size of 1-30 nm, and have good compatibility with BPA resin under the action of a modifier containing hydrogen bond donor groups, and the solubility parameter difference is between 0.1 and 0.8. The system after mixing has high stability, and has no precipitation after standing for ≥7 months under the condition of normal temperature and without light.

In one aspect, a method for preparing the zirconia resin-based dispersion liquid is provided by the present invention, including the following steps:
(a) adding zirconia particles into an organic solvent and mixing them evenly, then adding the modifier and solubilizer to modify the zirconia particles to obtain solution A, wherein
   the solution A contains modified zirconia particles with hydrogen bond donor groups on the surface; and
(b) mixing the solution A with the resin evenly, and then evaporating to remove the organic solvent to obtain the zirconia resin-based dispersion liquid.

As for the preparation method of the zirconia resin-based dispersion liquid provided by the present invention, in the preparation method, firstly the zirconia particles are added into an organic solvent and the resultant is evenly mixed, and then the modifiers and solubilizers are added to modify the zirconia particles, thereby obtaining solution A; after that, the solution A is mixed evenly with the resin, and then the organic solvent is removed by evaporation to obtain a zirconia resin-based dispersion liquid. The aforementioned preparation method can directly use the simplest process method to add zirconia powder into the organic solvent, which can greatly reduce the process steps, thereby reducing the cost; at the same time, the preparation process does not require the participation of the intermediate phase and has the advantages of simple process and easy operation.

In a preferable, embodiment of the present invention, the organic solvents include at least one of alcohol organic solvents, ketone organic solvents, ester organic solvents, ether organic solvents, aromatic hydrocarbon organic solvents, halogenated hydrocarbon organic solvents and cycloalkane organic solvents, preferably methoxyethyl acetate.

Preferably, the mass ratio of the zirconia particles to the organic solvent is 1:1-4, such as 1:1, 1:2, 1:3 or 1:4, preferably 1:2.

In a preferable embodiment of the present invention, the amount of the modifier added in the step (a) is 10-30 wt% of the mass of the zirconia particles. The typical but non-limiting mass fraction of mass of modifier in the mass of zirconia particle is 10 wt%, 12 wt%, 15 wt%, 18 wt%, 20 wt%, 22 wt%, 25 wt%, 28 wt% or 30 wt%.

In a preferable embodiment of the present invention, the amount of solubilizer added in the step (a) is 1-10 wt% of the mass of zirconia particles. The typical but non-limiting mass fraction of mass of solubilizer in the mass of zirconia particle is 1 wt%, 2 wt%, 5 wt%, 8 wt% or 10 wt%.

In a preferably embodiment of the present invention, the solubilizer includes at least one of sodium dodecyl sulfate, polyethylene glycol monooleate, polyethylene glycol laurate and polyethylene glycol monostearate.

As a preferably embodiment, the solubilizer component in the resin-based dispersion liquid can form hydrogen bonds with the groups grafted on the surface of zirconia and the BPA resin, respectively, to play a certain role of "medium solubilization", thereby increasing the compatibility of zirconia and BPA resin.

The addition amount of solubilizer is 1-10wt% of the content of nano-zirconia, which is free in the whole system and can form hydrogen bonds with the groups grafted on the surface of zirconia and BPA, respectively, thereby playing a certain role of "medium solubilization", thereby increasing the compatibility of zirconia and BPA resin.

It should be noted that the content of modifiers and solubilizers in the present invention should be controlled within a reasonable range. If the content is too low, the expected effect will not be achieved, and if the content is too high, the opposite effect will be caused as well as unnecessary economic losses.

In a preferable embodiment of the present invention, the mass fraction of modified zirconia particles in the zirconia resin-based dispersion liquid is 50-78wt%; and the typical but non-limiting mass fraction of modified zirconia particles is 50 wt%, 52 wt%, 55 wt%, 58 wt%, 60 wt%, 62 wt%, 65 wt%, 68 wt%, 70 wt%, 72 wt%, 75 wt% or 78 wt%.

In one aspect, the present invention provides an UV-curable adhesive, wherein the UV-curable adhesive is mainly prepared by mixing the above-mentioned zirconia resin-based dispersion liquid with alkoxy bisphenol A resin evenly.

The solubility parameter difference between the zirconia resin-based dispersion liquid and the alkoxy bisphenol A resin is ≤0.8.

The UV-curable adhesive provided by the present invention is mainly prepared by mixing the above-mentioned zirconia resin-based dispersion liquid with alkoxy bisphenol A resin evenly, wherein the solubility parameter difference between the zirconia resin-based dispersion liquid and the alkoxy bisphenol A resin is ≤0.8. Therefore, the zirconia resin-based dispersion liquid has good compatibility and stability with the alkoxy bisphenol A resin.

It should be noted that when the solubility parameters of the two systems are similar or equal to each other, it is beneficial for the two systems to blend with each other. It is generally believed that when the difference between the solubility parameters of the two systems is less than 0.8, the blending effect of the two systems is better. At the same time, the hydrogen bond interaction is the main index affecting the solubility parameter of the system. When the hydrogen bond interaction of the two systems is strong, it has a positive effect on the blending and miscibility of the two systems. The present invention introduces hydrogen bond donor groups capable of forming hydrogen bonds to the surface of the zirconia particle, thereby forming a hydrogen bond interaction between the zirconia and the BPA resin. The force of hydrogen bond is mainly related to the number of hydrogen bond donor groups introduced into the surface of zirconia. When the number of hydrogen bond donor groups is larger, the number of hydrogen bonds formed between zirconia and BPA resin is more, which leads to the increase of the force of hydrogen bond and further leads to the decrease of the solubility parameter difference between the two systems, thereby playing an important role in promoting the compatibility of the two systems.

In the above preferable embodiment, the mixing mass ratio of the zirconia resin-based dispersion liquid to the alkoxy bisphenol A resin is 0.5-3:1, such as 0.5:1, 1:1, 2:1 or 3:1, preferably 1:1.

As a preferable embodiment, the solubility parameter difference between the above-mentioned zirconia resin-based dispersion liquid and the alkoxy bisphenol A resin is 0.1-0.8, such that the system obtained by mixing these two at a mass ratio of 1:1 has good mutual solubility and good stability, and there is still no precipitation after standing for ≥7 months at room temperature and without light.

In a preferable embodiment of the present invention, the alkoxy bisphenol A resin includes at least one of 2 (ethoxyl) bisphenol A diacrylate, 3 (ethoxyl) bisphenol A diacrylate, 4 (ethoxyl) bisphenol A diacrylate, 8 (ethoxyl) bisphenol A diacrylate, 20 (ethoxyl) bisphenol A diacrylate, 30 (ethoxyl) bisphenol A diacrylate resin, preferably 20 (ethoxyl) bisphenol A diacrylate resin.

Further preferably, the alkoxy bisphenol A resin adopts KOMERATE D200.

In one aspect, the present invention provides use of the above zirconia resin-based dispersion liquid and the above UV-curable adhesive in the preparation of optical films

The zirconia resin-based dispersion liquid and UV-curable adhesive provided in the present invention can be widely used in the preparation process of optical films.

The technical solution of the present invention will be further described below in combination with examples.

It should be noted that the BPA resin used in the following examples and comparative examples of the present invention is KOMERATE D200.

### Example 1

A preparation method for UV-curable adhesive, including the following steps:
(1) adding the zirconia powder into the methoxyethyl acetate solvent at a mass ratio of 1:2, and keeping stirring and dispersing for 20 min, and then adding 3,6-dioxaoctanedioic acid (in which addition amount was 30% of the content of zirconium), and polyethylene glycol monooleate (in which addition amount was 1% of the content of zirconium) into the above system to perform modifying to obtain solution A, in which
   the solution A contained modified zirconia particles with hydrogen bond donor groups on the surface;
(2) mixing solution A with phenoxybenzyl acrylate (PBA) evenly, then removing the organic solvent by rotary evaporation to obtain a zirconia resin-based dispersion liquid, in which
   the parameters of the rotary evaporation were 65°C, 5mbar and 2 hours; and
   the tested grafted amount of hydrogen bond donor groups on the surface of zirconia particles in the zirconia resin-based dispersion liquid was 12%; and (3) mixing the zirconia resin-based dispersion liquid and BPA resin evenly at a mixing mass ratio of 1:1, in which the solubility parameter difference between the zirconia dispersion liquid and BPA resin was 0.63; after mixing these two at 1:1, they were able to be homogeneously compatible, which had no precipitation after standing for 7 months under normal temperature and without light.

### Example 2

A preparation method of UV-curable adhesive was provided.

In the preparation method, except that the addition amount of polyethylene glycol monooleate that was the solubilizer in the step (1) was 5% of the zirconium content, the rest was the same as that in Example 1.

The tested grafted amount of hydrogen bond donor groups on the surface of zirconia particles in the zirconia resin-based dispersion liquid was 20%; and
the solubility parameter difference between zirconia resin-based dispersion liquid and BPA resin was 0.1, after mixing these two at a ratio of 1:1, they were able to be uniformly compatible, which had no precipitation after standing for 7 months under normal temperature and without light.

### Example 3

A preparation method of UV-curable adhesive was provided.

In the preparation method, except that the addition amount of polyethylene glycol monooleate that was the solubilizer in the step (1) was 10% of the zirconium content, the rest was the same as that in Example 1.

The tested grafted amount of hydrogen bond donor groups on the surface of zirconia particles in the zirconia resin-based dispersion liquid was 15%; and
the solubility parameter difference between zirconia resin-based dispersion liquid and BPA resin was 0.33, after mixing these two at a ratio of 1:1, they were able to be uniformly compatible, which had no precipitation after standing for 7 months under normal temperature and without light.

### Example 4

A preparation method of UV-curable adhesive was provided.

In the preparation method, except that the amount of 3,6-dioxaoctanedioic acid that was the modifier in the step (1) was 10% of the zirconium content, the rest was the same as that in Example 2.

The tested grafted amount of hydrogen bond donor groups on the surface of zirconia particles in the zirconia resin-based dispersion liquid was 1%; and
the solubility parameter difference between the zirconia resin-based dispersion liquid and BPA resin was 0.8, after mixing these two at a ratio of 1:1, they were able to be uniformly compatible, which had no precipitation after standing for 7 months under normal temperature and without light.

### Example 5

A preparation method of UV-curable adhesive was provided.

In the preparation method, except that the amount of 3,6-dioxaoctanedioic acid that was the modifier in the step (1) was 20% of the zirconium content, the rest was the same as that in Example 2.

The tested grafted amount of hydrogen bond donor groups on the surface of zirconia particles in the zirconia resin-based dispersion liquid was 8%; and
the solubility parameter difference between the zirconia resin-based dispersion liquid and BPA resin was 0.68, after mixing these two at a ratio of 1:1, they were able to be uniformly compatible, which had no precipitation after standing for 7 months under normal temperature and without light.

### Example 6

A preparation method of UV-curable adhesive was provided.

In the preparation method, except that the modifier in step (1) was replaced by 2-(2-(2-(2-hydroxyethoxy)ethoxy)ethoxy)acetic acid, and the amount of the 2-(2-(2-(2-hydroxyethoxy)ethoxy)ethoxy)acetic acid was 30% of the zirconium content, the rest was the same as that in Example 2.

The tested grafted amount of hydrogen bond donor groups on the surface of zirconia particles in the zirconia resin-based dispersion liquid was 16%.

The solubility parameter difference between zirconia resin-based dispersion liquid and BPA resin was 0.27, after mixing these two at a ratio of 1:1, they were able to be uniformly compatible, which had no precipitation after standing for 7 months under normal temperature and without light.

### Example 7

A preparation method of UV-curable adhesive was provided.

In the preparation method, except that the modifier in step (1) was replaced by thiodipropionic acid, and the amount of the thiodipropionic acid was 30% of the zirconium content, the rest was the same as that in Example 2.

The tested grafted amount of hydrogen bond donor groups on the surface of zirconia particles in the zirconia resin-based dispersion liquid was 13%.

The solubility parameter difference between zirconia resin-based dispersion liquid and BPA resin was 0.45, after mixing these two at a ratio of 1:1, they were able to be uniformly compatible, which had no precipitation after standing for 7 months under normal temperature and without light.

### Example 8

A preparation method of UV-curable adhesive was provided.

In the preparation method, except that the modifier in step (1) was replaced by 3,3'-dithiodipropionic acid, and the amount of the 3,3'-dithiodipropionic acid was 30% of the zirconium content, the rest was the same as that in Example 2.

The tested grafted amount of hydrogen bond donor groups on the surface of zirconia particles in the zirconia resin-based dispersion liquid was 6%.

The solubility parameter difference between zirconia resin-based dispersion liquid and BPA resin was 0.74, after mixing these two at a ratio of 1:1, they were able to be uniformly compatible, which had no precipitation after standing for 7 months under normal temperature and without light.

### Example 9

A preparation method of UV-curable adhesive was provided.

In the preparation method, except that the solubilizer in step (1) was replaced by polyethylene glycol laurate, and the amount of the polyethylene glycol laurate was 5% of the zirconium content, the rest was the same as that in Example 2.

The tested grafted amount of hydrogen bond donor groups on the surface of zirconia particles in the zirconia resin-based dispersion liquid was 12%.

The solubility parameter difference between zirconia resin-based dispersion liquid and BPA resin was 0.56, after mixing these two at a ratio of 1:1, they were able to be uniformly compatible, which had no precipitation after standing for 7 months under normal temperature and without light.

### Example 10

A preparation method of UV-curable adhesive was provided.

In the preparation method, except that the solubilizer in step (1) was replaced by polyethylene glycol monostearate, and the amount of the polyethylene glycol monostearate was 5% of the zirconium content, the rest was the same as that in Example 2.

The tested grafted amount of hydrogen bond donor groups on the surface of zirconia particles in the zirconia resin-based dispersion liquid was 15%.

The solubility parameter difference between zirconia resin-based dispersion liquid and BPA resin was 0.32, after mixing these two at a ratio of 1:1, they were able to be uniformly compatible, which had no precipitation after standing for 7 months under normal temperature and without light.

### Example 11

A preparation method of UV-curable adhesive was provided.

In the preparation method, except that the solubilizer in step (1) was replaced by sodium dodecyl sulfate, and the amount of the sodium dodecyl sulfate was 5% of the zirconium content, the rest was the same as that in Example 2.

The tested grafted amount of hydrogen bond donor groups on the surface of zirconia particles in the zirconia resin-based dispersion liquid was 14%.

The solubility parameter difference between zirconia resin-based dispersion liquid and BPA resin was 0.4, after mixing these two at a ratio of 1:1, they were able to be uniformly compatible, which had no precipitation after standing for 7 months under normal temperature and without light.

### Example 12

A preparation method of UV-curable adhesive was provided.

In the preparation method, except that the resin in step (2) was replaced by biphenylmethanol acrylate (BPMA), the rest was the same as that in Example 2.

The tested grafted amount of hydrogen bond donor groups on the surface of zirconia particles in the zirconia resin-based dispersion liquid was 18%.

The solubility parameter difference between zirconia resin-based dispersion liquid and BPA resin was 0.16, after mixing these two at a ratio of 1:1, they were able to be uniformly compatible, which had no precipitation after standing for 7 months under normal temperature and without light.

### Example 13

A preparation method of UV-curable adhesive was provided.

In the preparation method, except that the resin in step (2) was replaced by benzyl acrylate (BZA), the rest was the same as that in Example 2.

The tested grafted amount of hydrogen bond donor groups on the surface of zirconia particles in the zirconia resin-based dispersion liquid was 16%.

The solubility parameter difference between zirconia resin-based dispersion liquid and BPA resin was 0.3, after mixing these two at a ratio of 1:1, they were able to be uniformly compatible, which had no precipitation after standing for 7 months under normal temperature and without light.

### Example 14

A preparation method of UV-curable adhesive was provided.

In the preparation method, except that the resin in step (2) was replaced by o-phenylphenoxyethyl acrylate (OPPEA), the rest was the same as that in Example 2.

The tested grafted amount of hydrogen bond donor groups on the surface of zirconia particles in the zirconia resin-based dispersion liquid was 18%.

The solubility parameter difference between zirconia resin-based dispersion liquid and BPA resin was 0.18, after mixing these two at a ratio of 1:1, they were able to be uniformly compatible, which had no precipitation after standing for 7 months under normal temperature and without light.

### Comparative Example 1

A preparation method of UV-curable adhesive was provided.

In the preparation method, except that no solubilizer that was polyethylene glycol monooleate was used in the step (1), the rest was the same as that in Example 1.

The tested grafted amount of hydrogen bond donor groups on the surface of zirconia particles in the zirconia resin-based dispersion liquid was 0.8%.

The solubility parameter difference between the zirconia resin-based dispersion liquid and the BPA resin was 1.12, after mixing these two at a ratio of 1:1, the compatibility was poor. The zirconia was precipitated after standing for 7 months under normal temperature and without light.

### Comparative Example 2

A preparation method of UV-curable adhesive was provided.

In the preparation method, except that the addition amount of 3,6-dioxaoctanedioic acid in the step (1) was 5% of the zirconium content, the rest was the same as that in Example 2.

The tested grafted amount of hydrogen bond donor groups on the surface of zirconia particles in the zirconia resin dispersion liquid was 0.1%.

The solubility parameter difference between the zirconia resin dispersion and BPA resin was 1.43, after mixing these two at a ratio of 1:1, the compatibility was poor. The zirconia was precipitated after standing for 7 months under normal temperature and without light.

### Comparative Example 3

A preparation method of UV-curable adhesive was provided.

In the preparation method, except that the addition amount of 3,6-dioxaoctanedioic acid in the step (1) was 35% of the zirconium content, the rest was the same as that in Example 2.

The tested grafted amount of hydrogen bond donor groups on the surface of zirconia particles in the zirconia resin dispersion liquid was 0.5%.

The solubility parameter difference between the zirconia resin dispersion and BPA resin was 1.28, after mixing these two at a ratio of 1:1, the compatibility was poor. The zirconia was precipitated after standing for 7 months under normal temperature and without light.

### Comparative Example 4

A preparation method of UV-curable adhesive was provided.

In the preparation method, except that the addition amount of polyethylene glycol monooleate in the step (1) was 15% of the zirconium content, the rest was the same as that in Example 2.

The tested grafted amount of hydrogen bond donor groups on the surface of zirconia particles in the zirconia resin dispersion liquid was 0.7%.

The solubility parameter difference between the zirconia resin dispersion and BPA resin was 1.21, after mixing these two at a ratio of 1:1, the compatibility was poor. The zirconia was precipitated after standing for 7 months under normal temperature and without light.

### Comparative Example 5

A preparation method of UV-curable adhesive was provided.

In the preparation method, except that the modifier in step (1) was replaced by suberic acid, and the amount of suberic acid was 30% of the zirconium content, the rest was the same as that in Example 2.

Since no hydrogen bond donor group existed in the suberic acid, the grafted amount of the hydrogen bond donor group on the surface of the zirconia particles in the zirconia resin-based dispersion liquid was 0.

The solubility parameter difference between the zirconia resin-based dispersion liquid and BPA resin was 1.52, after mixing these two at a ratio of 1:1, the compatibility was poor. The zirconia was precipitated after standing for 7 months under normal temperature and without light.

Specifically, the technical effects of compatibility of Examples 1-14 and Comparative Examples 1-5 are shown in the following table.

| Group | Modifier | Modifier Addition amount | Solubilizer | Solubilizer Addition amount | Resin | The grafted amount of hydrogen bond donor groups on the surface of zirconia | System solubility parameter difference | Stability after mixing with BPA |
|---|---|---|---|---|---|---|---|---|
| | | | | | | | | (stand for ≥7 months under normal temperature and without light) |
| Example 1 | 3,6-dioxaoctanedioic acid | 30wt % | Polyethylene glycol monooleate | 1wt % | PBA | 12wt% | 0.63 | No precipitation |
| Example 2 | 3,6-dioxaoctanedioic acid | 30wt % | Polyethylene glycol monooleate | 5wt % | PBA | 20wt% | 0.1 | No precipitation |
| Example 3 | 3,6-dioxaoctanedioic acid | 30wt % | Polyethylene glycol monooleate | 10wt % | PBA | 15wt% | 0.33 | No precipitation |
| Example 4 | 3,6-dioxaoctanedioic acid | 10wt % | Polyethylene glycol monooleate | 5wt % | PBA | 1wt% | 0.8 | No precipitation |
| Example 5 | 3,6-dioxaoctanedioic acid | 20wt % | Polyethylene glycol monooleate | 5wt % | PBA | 8wt% | 0.68 | No precipitation |
| Example 6 | 2-(2-(2-(2-hydroxyethoxy)ethoxy) ethoxy)acetic acid | 30wt % | Polyethylene glycol monooleate | 5wt % | PBA | 16wt% | 0.27 | No precipitation |
| Example 7 | thiodipropionic acid | 30wt % | Polyethylene glycol monooleate | 5wt % | PBA | 13wt% | 0.45 | No precipitation |
| Example 8 | 3,3'-dithiodipropionic acid | 30wt % | Polyethylene glycol monooleate | 5wt % | PBA | 6wt% | 0.74 | No precipitation |
| Example 9 | 3,6-dioxaoctanedioic acid | 30wt % | Polyethylene glycol laurate | 5wt % | PBA | 12wt% | 0.56 | No precipitation |
| Example 10 | 3,6-dioxaoctanedioic acid | 30wt % | Polyethylene glycol monostearate | 5wt % | PBA | 15wt% | 0.32 | No precipitation |
| Example 11 | 3,6-dioxaoctanedioic acid | 30wt % | Sodium dodecyl sulfate | 5wt % | PBA | 14wt% | 0.4 | No precipitation |
| Example 12 | 3,6-dioxaoctanedioic acid | 30wt % | Polyethylene glycol monooleate | 5wt % | BPMA | 18wt% | 0.16 | No precipitation |
| Example 13 | 3,6-dioxaoctanedioic acid | 30wt % | Polyethylene glycol monooleate | 5wt % | BZA | 16wt% | 0.3 | No precipitation |
| Example 14 | 3,6-dioxaoctanedioic acid | 30wt % | Polyethylene glycol monooleate | 5wt % | OPPE A | 18wt% | 0.18 | No precipitation |
| Comparative Example 1 | 3,6-dioxaoctanedioic acid | 30wt % | - | - | PBA | 0.8wt% | 1.12 | Precipitation |
| Comparative Example 2 | 3,6-dioxaoctanedioic acid | 5% | Polyethylene glycol monooleate | 5wt % | PBA | 0.1wt% | 1.43 | Precipitation |
| Comparative Example 3 | 3,6-dioxaoctanedioic acid | 35% | Polyethylene glycol monooleate | 5wt % | PBA | 0.5wt% | 1.28 | Precipitation |
| Comparative Example 4 | 3,6-dioxaoctanedioic acid | 30wt % | Polyethylene glycol monooleate | 15wt % | PBA | 0.7wt% | 1.21 | Precipitation |
| Comparative Example 5 | Suberic acid | 30wt % | Polyethylene glycol monooleate | 5wt % | PBA | 0 | 1.52 | Precipitation |

In summary, it can be seen from the above experimental results that the solubility parameter difference between the zirconia resin-based dispersion liquid and the alkoxy bisphenol A resin in the UV-curable adhesive provided by Examples 1-14 of the present invention is ≤0.8. Therefore, the zirconia resin-based dispersion liquid has good compatibility and stability with the alkoxy bisphenol A resin. Under the circumstances that no solubilizer was contained in Comparative Example 1, no hydrogen bond donor group existed in the modifier in Comparative Example 5, and the amount of the modifier was not at the range of 10-30wt% of the mass of the zirconia particle or the amount of the solubilizer was not at the range of 1-10wt% of the mass of zirconia particles in Comparative Examples 2-4, the zirconia resin-based dispersion liquid has poor compatibility with BPA resin. Meanwhile, zirconia is precipitated after standing for 7 months at normal temperature and without light, which cannot achieve the technical effects of strong stability and good compatibility.

The present invention has been illustrated and described by particular examples, it should be appreciated that various other changes and modifications can be made without departing from the spirit and scope of the present invention. Therefore, it is intended to cover in the appended claims all such changes and modifications that are within the scope of the present invention.

### Industrial Applicability

The modified zirconia particles in the zirconia resin-based dispersion liquid provided by the present invention can not only increase the liposolubility of the zirconia particles due to the introduction of hydrogen bond donor groups on the surface, but also have hydrogen bond interaction with alkoxy bisphenol A resin (BPA resin), thereby increasing the compatibility and stability of the zirconia resin-based dispersion liquid and BPA resin, which is then used in the preparation of industrial UV-curable adhesive and optical films.

## Claims

1. A zirconia resin-based dispersion liquid, wherein the zirconia resin-based dispersion liquid is mainly composed of modified zirconia particles and a resin, wherein
a surface of the modified zirconia particles has hydrogen bond donor groups, and a grafted amount of the hydrogen bond donor groups on a surface of zirconia particles used to form the modified zirconia particles is 1-20 wt%.

2. The zirconia resin-based dispersion liquid according to claim 1, wherein the hydrogen bond donor groups on the surface of the zirconia particles are mainly introduced by a modifier, wherein
a general formula of the modifier is: R-A-X (I),
where in formula (I), R is alkyl groups, alkoxy groups, carboxyl groups, hydroxyl groups, substituted or unsubstituted aromatic rings or substituted or unsubstituted acryloyloxy groups; A is alkoxy chain segments, thioether chain segments or aromatic ether chain segments; and X is carboxyl groups, hydroxyl groups, phosphate groups, sulfonic acid groups, or substituted or unsubstituted siloxy groups.

3. The zirconia resin-based dispersion liquid according to claim 2, wherein the modifier comprises at least one of 3,6-dioxaoctanedioic acid, 2-(2-(2-(2-hydroxyethoxy)ethoxy)ethoxy)acetic acid, thiodipropionic acid and 3,3'-dithiodipropionic acid.

4. The zirconia resin-based dispersion liquid according to claim 1, wherein the resin comprises at least one of a phenoxybenzyl acrylate, a biphenylmethanol acrylate, a benzyl acrylate and an o-phenylphenoxyethyl acrylate.

5. The zirconia resin-based dispersion liquid according to claim 1, wherein a particle size of the zirconia particles is between 1nm and 30 nm.

6. A method for preparing the zirconia resin-based dispersion liquid according to any one of claims 1-5, wherein the method comprises following steps:
(a) adding the zirconia particles into an organic solvent and mixing them evenly, then adding a modifier and a solubilizer to modify the zirconia particles to obtain a solution A, wherein
the solution A contains the modified zirconia particles which have the hydrogen bond donor groups on the surface; and
(b) mixing the solution A with the resin evenly, and then evaporating to remove the organic solvent to obtain the zirconia resin-based dispersion liquid.

7. The method for preparing the zirconia resin-based dispersion liquid according to claim 6, wherein the organic solvent comprises at least one of alcohol organic solvents, ketone organic solvents, ester organic solvents, ether organic solvents, aromatic hydrocarbon organic solvents, halogenated hydrocarbon organic solvents and cycloalkane organic solvents.

8. The method for preparing the zirconia resin-based dispersion liquid according to claim 7, wherein the organic solvent is a methoxyethyl acetate.

9. The method for preparing the zirconia resin-based dispersion liquid according to claim 7, wherein a mass ratio of the zirconia particles to the organic solvent is 1:1-4.

10. The method for preparing the zirconia resin-based dispersion liquid according to claim 7, wherein a mass ratio of the zirconia particles to the organic solvent is 1:2.

11. The method for preparing the zirconia resin-based dispersion liquid according to claim 6, wherein an addition amount of the modifier in the step (a) is 10-30wt% of a mass of the zirconia particles.

12. The method for preparing the zirconia resin-based dispersion liquid according to claim 6, wherein an addition amount of the solubilizer in the step (a) is 1-10wt% of a mass of the zirconia particles.

13. The method for preparing the zirconia resin-based dispersion liquid according to claim 6, wherein the solubilizer comprises at least one of sodium dodecyl sulfate, polyethylene glycol monooleate, polyethylene glycol laurate and polyethylene glycol monostearate.

14. The method for preparing the zirconia resin-based dispersion liquid according to claim 6, wherein a mass of the modified zirconia particles in the zirconia resin-based dispersion liquid is 50-78wt%.

15. A UV-curable adhesive, wherein the UV-curable adhesive is mainly prepared by mixing the zirconia resin-based dispersion liquid according to any one of claims 1-5 and an alkoxy bisphenol A resin evenly, wherein
a solubility parameter difference between the zirconia resin-based dispersion liquid and the alkoxy bisphenol A resin is ≤0.8.

16. The UV-curable adhesive according to claim 15, wherein a mixing mass ratio of the zirconia resin-based dispersion liquid to the alkoxy bisphenol A resin is 0.5-3:1.

17. The UV-curable adhesive according to claim 15, wherein a mixing mass ratio of the zirconia resin-based dispersion liquid to the alkoxy bisphenol A resin is 1:1.

18. The UV-curable adhesive according to claim 15, wherein the alkoxy bisphenol A resin comprises at least one of 2(ethoxyl) bisphenol A diacrylate, 3(ethoxyl) bisphenol A diacrylate, 4(ethoxyl) bisphenol A diacrylate, 8(ethoxyl) bisphenol A diacrylate, 20(ethoxyl) bisphenol A diacrylate and 30(ethoxyl) bisphenol A diacrylate resin.

19. The UV-curable adhesive according to claim 15, wherein the alkoxy bisphenol A resin is 20(ethoxyl) bisphenol A diacrylate resin.

20. The UV-curable adhesive according to claim 15, wherein the alkoxy bisphenol A resin is KOMERATE D200.

21. Use of the zirconia resin-based dispersion liquid according to any one of claims 1-5 and the UV-curable adhesive according to any one of claims 15-20 in a preparation of optical films.
